# EUROPEAN PATENT SPECIFICATION

(11) **EP 3 939 807 B1**
(45) Date of publication and mention of the grant of the patent: **29.03.2023**
(21) Application number: 21182761.3
(22) Date of filing: 30.06.2021
(51) Int. Cl.: B60C 9/22, B29D 30/16, B29D 30/60, B29D 30/70

(54) **TIRE**
REIFEN
PNEUMATIQUE

(30) Priority: 14.07.2020 JP 2020120808
(43) Date of publication of application: 19.01.2022
(73) Proprietor: Sumitomo Rubber Industries, Ltd., Kobe-shi, Hyogo-ken 651-0072 (JP)
(72) Inventor: SHIBAMOTO, Shohei, Kobe-shi, Hyogo 651-0072 (JP)
(74) Representative: Manitz Finsterwald Patent- und Rechtsanwaltspartnerschaft mbB

(56) References cited:
- EP-A1- 1 500 526
- EP-A1- 3 530 485
- WO-A1-2006/032479
- US-A1- 2013 168 003

## Description

### Technical field

The present invention relates to a tire having a tread portion provided with a spiral band.

### Background art

WO 2018/123685 A1 discloses a pneumatic tire having a tread portion provided with a spiral belt.

EP 3 530 485 A1, WO 2006/032479 A1, US 2013/0168003 A1 and EP 1 500 526 A1 each disclose a tire having a band with a band cord.

### Summary of the invention

### Problems to be solved by the invention

The spiral belt disclosed in WO 2018/123685 A1 is composed of a closely spaced region in which steel cords of adjacent ribbon-like strips are closely spaced, and loosely spaced regions in which steel cords of adjacent ribbon-like strips are loosely spaced.

Due to the loosely spaced regions, there is a possibility that rigidity becomes insufficient, and thereby, the acceleration performance and durability performance are deteriorated. Thus, there is room for improvement in the acceleration performance and durability performance.

The present invention was made in view of the above circumstances, and an object of the present invention is to provide a tire in which the deterioration in the acceleration performance due to insufficient rigidity of the tread portion can be suppressed.

According to the present invention, a tire comprises a tread portion provided with a band composed of at least one band cord wound spirally and circumferentially of the tire and embedded in the tread portion, wherein
when a band cord piece is taken out from the above-said at least one band cord embedded in the tread portion and measured for the length,
a length Lb is smaller than a length La (Lb < La) at least in a part of the tread portion, where the length Lb is measured at a first point of time after the band cord piece has been taken out, and
the length La is measured at a second point of time after the first point of time.

It is preferable that the second point of time is 24 hours after the band cord piece has been taken out.

It is preferable that a difference (Lb-La) of the length Lb from the length La is in a range from -5.0% up to but excluding 0.0% of the length Lb.

It is preferable that a difference (Lb-La) of the length Lb from the length La is in a range from -4.5% up to but excluding 0.0% of the length Lb.

It is preferable that a difference (Lb-La) of the length Lb from the length La is in a range from -4.0% up to but excluding 0.0% of the length Lb.

It is preferable that the length of the band cord piece to be taken out is at least 1/4 of the circumference of the band.

It is preferable that the band is provided so as to extend in the tire axial direction across the tire equator, and a value (Lb-La)/Lb obtained in a crown portion of the band which is defined as being centered on the tire equator and having a developed width of 10% of the developed width of the band is larger than a value (Lb-La)/Lb obtained in a portion of the band other than the crown portion.

It is preferable that the band is provided so as to extend in the tire axial direction across the tire equator, and when a crown portion of the band is defined as being centered on the tire equator and having a developed width of 10% of the developed width of the band,
a shoulder portion of the band is defined as having a developed width of 10% of the developed width of the band and extending from each of axial edges of the band, and
a middle portion of the band is defined as extending between the crown portion and each shoulder portion, then
absolute values of differences in a value {(Lb-La)/Lb}x100 between the crown portion, the shoulder portions and the middle portions are not more than 2.0.

It is preferable that a product (k × N) of a compressive stiffness k of each band cord and an average cord count N per 25 mm of the band is in a range from 1500 to 15000 N/mm.

It is preferable that the average cord count N is 10 to 40 per 25 mm.

It is preferable that the developed width of the band is in a range from 70% to 90% of the developed width of the tread portion.

It is preferable that the above-said at least one band cord is a plurality of the band cords, and

the band is formed by winding a tape of rubber in which the plurality of the band cords are embedded parallel with each other along the length of the tape.

It is preferable that the band cords include a steel cord.

It is preferable that the compressive stiffness k of each band cord is in a range from 10 to 1000 N/mm.

It is preferable that each band cord is composed of a plurality of strands twisted together, and the strands include at least one strand shaped before twisted.

It is preferable that the tire is a motorcycle tire.

### Effects of the Invention

In the tire according to the present invention, the length Lb is not larger than the length La as described above, in other words, the band cord is embedded in the tread portion in a state of the band cord to which tensile stress is not applied, and thereby stiff response can be obtained by high compressive stiffness occurred immediately after the driving force is transmitted to the tire, and the acceleration performance is improved.

### Brief description of the drawings

Fig. 1 is a meridian cross-sectional view of a tire as an embodiment of the present invention.
Fig. 2 is a cross-sectional view showing a procedure for taking out a band cord piece from the tread portion of the tire shown in Fig. 1.
Fig. 3 is a graph showing a transitional change of the length of the band cord piece taken out from the tread portion of Fig. 2.
Fig. 4 is the above-mentioned meridian cross-sectional view of the tire for explaining the band.
Fig. 5 is a schematic perspective view for explaining a procedure for measuring the compressive stiffness of the band cord.
Fig. 6 is a graph showing a load-compression curve of a band cord for explaining the compressive stiffness of the band cord.
Fig. 7 is a schematic perspective view showing a band tape in which band cords are embedded.
Fig. 8 is a schematic cross-sectional view showing an example of the structure of the band cord.
Fig. 9 is a schematic view showing a shaped strand constituting the band cord shown in Fig. 8.

### Description of the Preferred Embodiments

Hereinafter, an embodiment of the present invention will be described in detail in conjunction with accompanying drawings.

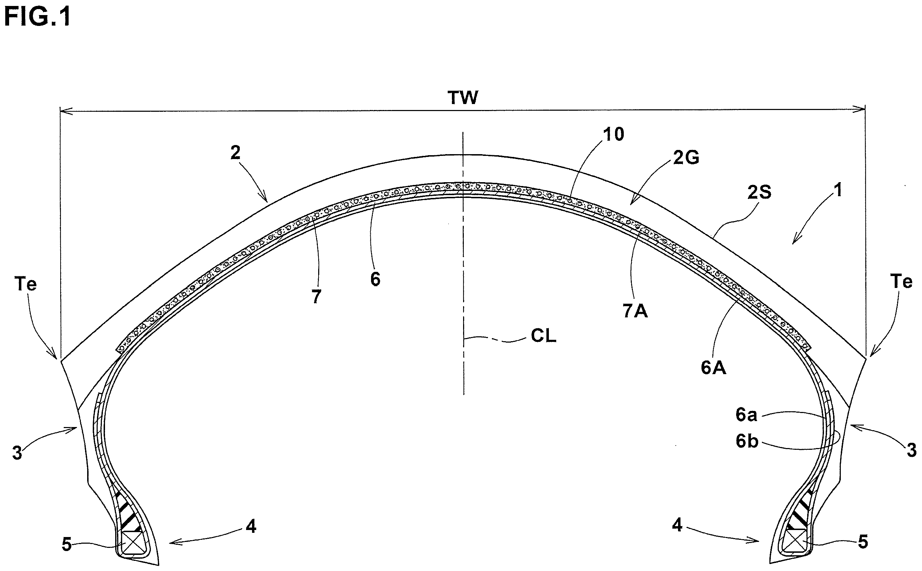

Fig. 1 shows a meridian cross section of a tire 1 as an embodiment of the present invention under its normal state.

Here, the "normal state" is such that the tire is mounted on a normal rim (not shown) and inflated to a normal pressure but loaded with no tire load.

In this application including specification and claims, various dimensions, positions and the like of the tire refer to those under the normal state of the tire unless otherwise noted.

The "normal rim" is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The "normal pressure" is the maximum air pressure for the tire specified together with the maximum tire load by the same organization in the Air-pressure/Maximum-load Table or similar list. For example, the standard pressure is the "maximum air pressure" in JATMA, the "Inflation Pressure" in ETRTO, the maximum pressure given in the "Tire Load Limits at various Cold Inflation Pressures" table in TRA or the like.

If there is no applicable standard such as racing tires, a wheel rim and air pressure which are recommended or specified by the tire manufacturer or the like, are used as the normal rim and normal pressure.

The tire 1 according to the present invention comprises a tread portion 2, a pair of axially spaced bead portions 4, and a pair of sidewall portions 3 extending between the tread edges and the bead portions 4.

In the present embodiment, the tire 1 is designed as a motorcycle tire. Thus, in order that a sufficient contact area can be obtained even when turning with a large camber angle, the tread 2S or ground contacting surface of the tread portion 2 between the tread edges Te is curved in an arc shape which is convex toward the radially outside, and the maximum tire section width lies between the tread edges Te. The maximum tire section width is therefore, equal to the tread width TW which is the axial distance between the tread edges Te.

The tire 1 comprises a carcass 6 extending between the bead portions 4 through the tread portion 2 and the sidewall portions 3, and a tread reinforcing band 7 disposed in the tread portion 2.

Further, in each of the bead portions 4, a bead core 5 is embedded. The bead core 5 is formed by winding one or more steel bead wires (not shown), for example, into a polygonal cross-sectional shape.

The carcass 6 is composed of at least one carcass ply 6A of carcass cords rubberized with a topping rubber, extending between the bead portions through the tread portion and the sidewall portions, and secured to the bead core 5 in each of the bead portions 4.

For example, organic fiber cords such as polyester, nylon, rayon, polyethylene naphthalate and aramid, and metal cords such as steel can be used as the carcass cords.

In the present embodiment, the carcass ply 6A is turned up around the bead core 5 in each of the bead portions 4 from the inside to the outside of the tire so as to form a pair of turnup portions 6b and a main portion 6a therebetween.

The turnup portions 6b in this example are extended into the respective sidewall portions 3 and terminated therein.

The band 7 is disposed on the radially outside of the carcass 6 in the tread portion 2 so as to extend across the tire equator CL to reinforce the tread portion 2 over a wide range.

Incidentally, the tread portion may be further provided, between the carcass 6 and the band 7, with a tread reinforcing belt composed of belt plies.

The band 7 is reinforced by at least one band cord 10 embedded therein. The at least one band cord 10 is wound spirally, circumferentially of the tire into at least one band ply 7A, namely at least one layer.

In the tread portion 2 on the radially outside of the band 7, there is disposed a tread rubber 2G whose radially outer surface forms the above-said tread 2S. As the tread rubber 2G, a rubber compound, for example, excellent in wear resistance and grip performance is suitably used.

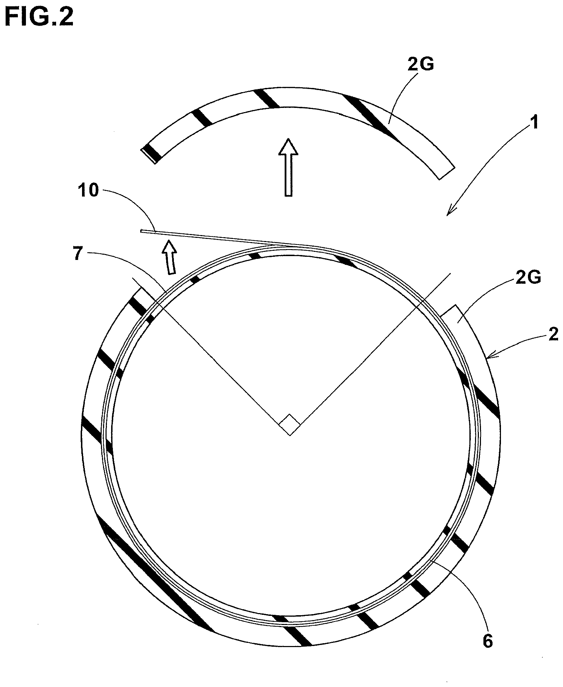

Fig. 2 shows a procedure for taking out a piece of the band cord 10 from the tread portion 2 of the tire 1.

As shown, by peeling a part of the tread rubber 2G from the band 7, the band cord(s) 10 is exposed so as to take out a piece of the band cord 10 from the tread portion 2.

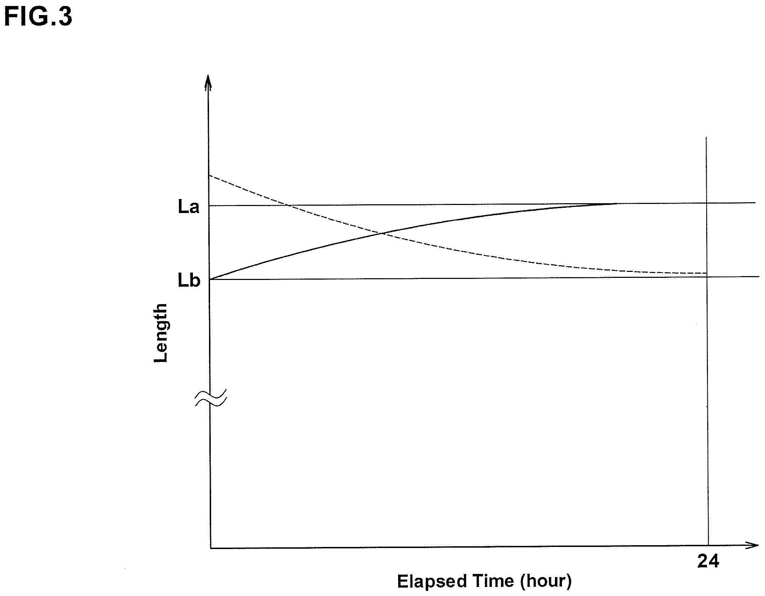

In Fig. 3, a transitional change of the length of the piece of the band cord 10 taken out from the tread portion 2, is shown by a solid line, and by way of comparison, a typical transitional change occured in a conventional tire is shown by a broken line.

In the conventional tires, tensile stress acts on the band cord embedded in the tread portion, therefore, the length of the band cord piece taken out from the tread portion decreases over time and converges to a certain value.

On the other hand, in the ground contacting patch of the tread portion, compressive stress acts on the band cord(s) which increases the rigidity of the ground contacting patch, which contributes to the improvement of the acceleration performance of the tire.

In the conventional tires, since the tensile stress acts on the band cord(s), the change from the tensile stress to a compressive stress requires time, and accordingly, the generation of the compressive stress is delayed, and its magnitude is small. Therefore, it is difficult to sufficiently increase the rigidity of the ground contacting part

According to the present invention, since a compressive stress already acts on the band cord(s) 10 embedded in the tread portion 2, the length of the band cord piece taken out from the tread portion 2 increases over time and converges to a certain value.

Thus, at least in a part of the tread portion, the band cord piece taken out therefrom satisfy a condition Lb < La, namely,
the length Lb of the band cord piece measured at a first point of time after the band cord piece was taken out becomes smaller than
the length La of the band cord piece is measured at a second point of time after the first point of time.

It is preferred that the first point of time is set as short as possible from the viewpoint of making the length Lb closer to the length when embedded in the tread portion 2. It is preferable that the first point of time is not more than 60 minutes after the band cord piece is taken out.

The second point of time should be sufficient for converging the increase in the length of the band cord piece taken out from the tread portion 2 and becoming a stable length La. For example, the second point of time is 24 hours after the band cord piece is taken out.

According to the present invention, the band cord(s) 10 is embedded in the tread portion 2 in a state in which compressive stress is applied to the band cord(s) 10. Therefore, rigid response can be obtained by high compressive stiffness occurred immediately after the driving force is transmitted to the tire, and the acceleration performance is improved.

In the present embodiment, the density of the windings or turns of the spirally wound band cord(s) 10 in the width direction of the band is not changed over the entire width of the band. Thus, the durability of the tire 1 can be easily maintained.

The band 7 in the present embodiment can be manufactured by adjusting the winding diameter, tension, and cord spacings in the tire axial direction of the band cord(s) 10 when building a raw tire before vulcanization, for example, by adjusting the winding diameter of the band cord(s) 10 to be larger, the tension of the band cord(s) 10 to be smaller, and the cord spacings to be wider. At this time, it is effective to adjust the winding tension of the tread rubber 2G to be larger than usual. This has another advantage such that when a split-type tire vulcanization mold is used, the tread rubber 2G can be prevented from being pinched between dies of the mold when closing, and the band cord(s) 10 is prevented from meandering.

In the tire 1 of the present embodiment, the value {(Lb-La)/Lb}x100 is preferably set in a range from -5.0 up to but excluding 0.0.

When the value {(Lb-La)/Lb}x100 is not larger than 0.0, rigid response can be obtained by high compressive stiffness occurred immediately after the driving force is transmitted to the tire, and the acceleration performance is improved.

When the value {(Lb-La)/Lb}x100 is not lower than -5.0, it becomes easy to secure a sufficient ground contact area to improve the grip performance. Further, the outer diameter of the raw tire before vulcanization does not become excessively large, therefore, the tread rubber 2G is prevented from being pinched between dies of a split-type mold for tire vulcanization when closing the mold.

From the above-described viewpoint, the value {(Lb-La)/Lb}x100 is preferably not lower than -4.5, more preferably not lower than -4.0.

As shown in Fig. 2, it is preferable that the piece of the band cord 10 is taken out with a length of 1/4 or more of the circumference of the band 7 embedded in the tread portion 2, in other words, the band cord piece is taken out with an angular range of at least 90 degrees around the tire rotational axis in order to accurately evaluate the lengths La and Lb of the band cord piece.

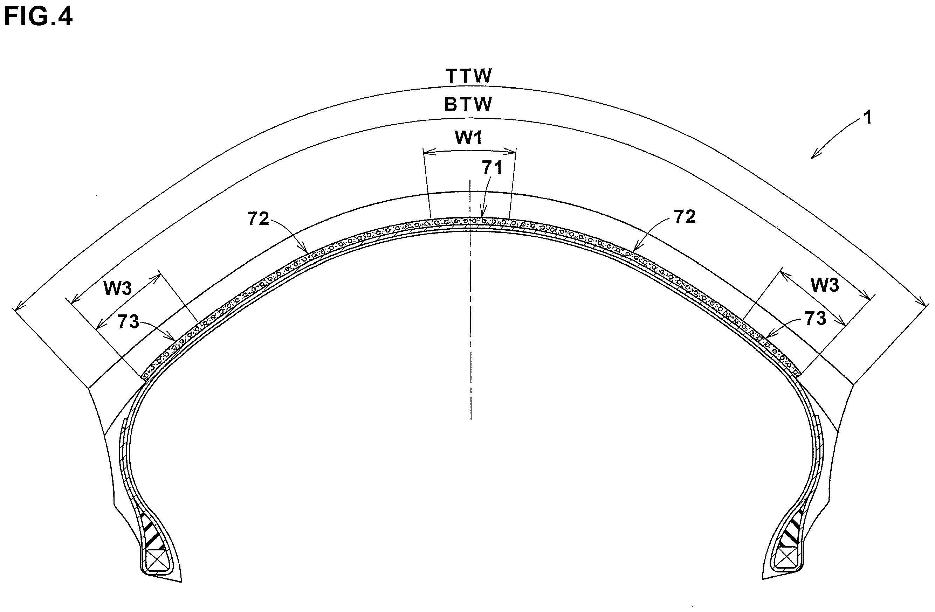

Fig. 4 is a meridian cross section of the tire 1 showing the band 7. The band 7 has a crown portion 71, middle portions 72 and shoulder portions 73 defined as follows.

The crown portion 71 is defined as being centered on the tire equatorial CL and having a developed width W1 of 10% of the developed width BTW of the band 7.

The shoulder portions 73 are defined as extending from the respective axial edges of the band 7 toward the tire equator and each having a developed width W3 of 10% of the developed width BTW of the band 7.

The middle portions 72 are defined as extending from the respective shoulder portions 73 to the crown portion 71.

It is preferable that the value {(Lb-La)/Lb}×100 in the crown portion 71 is larger than the value {(Lb-La)/Lb}x100 in the regions other than the crown portion 71, namely, the middle portions 72 and the shoulder portions 73.

By the way, in a tire mounted on a rear wheel of a motorcycle, a tread's crown region corresponding to the crown portion 71 comes into contact with the ground during straight running, and when a brake is applied, the vehicle weight shifts toward the front tire, and accordingly, the tire load applied to the crown region of the rear tire tends to become low. As a result, the ground contact area is decreased, and there is a possibility that the grip performance is deteriorated.

In the present embodiment, however, the value {(Lb-La)/Lb}x100 is higher in the crown portion 71 than in the middle portions 72 and the shoulder portions 73, therefore, the compressive stiffness in the tread's crown region is suppressed. Thus, the ground contact area of the tire 1 mounted on the rear wheel can be secured even when a brake is applied during straight running, and the grip performance is improved.

On the other hand, tread's middle regions and tread's shoulder regions corresponding to the middle portions 72 and shoulder portions 73, respectively, come into contact with the ground during cornering made by leaning the vehicle body, the rear tire tends to be subjected to a higher load than the front tire due to the cornering G force.

In the present embodiment, since the value {(Lb-La)/Lb}x100 is lower in the middle portions 72 and shoulder portions 73 than in the crown portion 71, the compressive stiffness is relatively increased in the middle portions 72 and shoulder portions 73. As a result, the deformation of the tread portion 2 during cornering, of the tire 1 mounted on the rear wheel is suppressed, and the grip performance can be improved.

When exiting from a low-speed corner, acceleration is made while raising the vehicle body from a large lean angle, and the tread's middle region corresponding to the middle portion 72 of the rear tire tends to have a high load.

In the present embodiment, since the value {(Lb-La)/Lb}x100 is lower in the middle portion 72 than in the crown portion 71, the compressive stiffness is relatively increased in the tread's middle region, therefore, when exiting from a low-speed corner, the deformation of the tread portion 2 of the tire 1 mounted on the rear wheel is suppressed, and the grip performance can be improved.

Further, when exiting from a high-speed corner, acceleration is made with a large lean angle, and the tread's shoulder region corresponding to the shoulder portion 73 tends to have a high load.

In the present embodiment, since the value {(Lb-La)/Lb}x100 is lower in the shoulder portion 73 than in the crown portion 71, the compressive stiffness is relatively increased in the tread's shoulder region, therefore, when exiting from a high-speed corner, the deformation of the tread portion 2 of the tire 1 mounted on the rear wheel is suppressed, and the grip performance can be improved.

Absolute values of differences in the value {(Lb-La)/Lb}x100 between the crown portion 71, the middle portion 72, and the shoulder portion 73 are preferably not more than 2.0. When the absolute values of the above differences are not more than 2.0, the change in the compressive stiffness of the tread portion 2 from braking to accelerating though cornering becomes gentle, and transient characteristics are improved.

Further, it is preferable that the product (k × N) of the compressive stiffness k of the band cord 10 and the average cord count N is set in a range from 1500 to 15000 N/mm.

Here, the compressive stiffness is measured as follows.

First, measurement samples K1 and K2 are prepared.

In the measurement sample K1, the band cord 10 is embedded.

But, in the measurement sample K2 to be used as a reference, the band cord is not embedded.

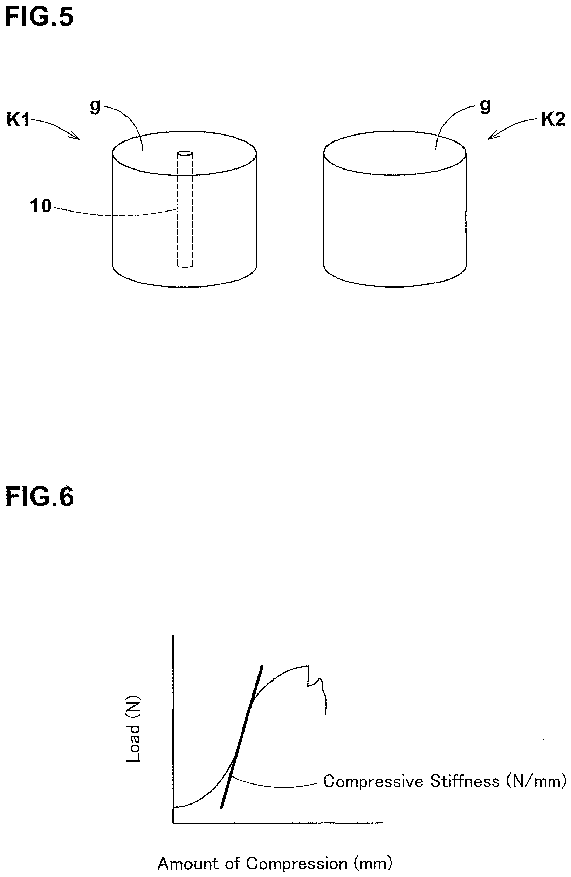

As shown in Fig. 5, in this example, the measurement sample K1 is a cylindrical rubber block g which have a diameter of 25 mm and a height of 25 mm, and in which one band cord 10 having a length of 25 mm is embedded along the central axis so as to extend in the height direction.

The measurement sample K2 is a cylindrical rubber block g having a diameter of 25 mm and a height of 25 mm in which no cord is embedded.

The cylindrical rubber blocks g of the samples K1 and K2 are formed from the same rubber compound vulcanized under vulcanization conditions (for example, temperature 165 degrees C for 18 minutes).

Using a tensile testing machine in a compress mode, for example, each of the samples K1 and K2 is compressed in the height direction at a speed of 2.0 mm/min, and the compressive load and the amount of compression are measured.

Then, by correcting the measurement data of the sample K1 with the measurement data of the sample K2 as reference, for example by obtaining their difference, a load-compression curve of the band cord 10 is obtained. A typical example is shown in Fig. 6. Then, as shown in Fig. 6, by obtaining the gradient in a linear portion in the middle of this curve, the compressive stiffness (N/mm) of the band cord 10 is defined therefrom.

The average cord count N per 25 mm is the number of cut ends of the band cord(s) appeared in the tire meridian cross section over the entire developed width BTW of the band 7 which is divided by the developed width BTW in millimeter and multiplied by 25.

When the product (k × N) is 1500 N/mm or more, the rigidity of the tread portion 2 is easily secured, and the acceleration performance and the durability performance are improved.

In the case of a vehicle having a small engine capacity in which cornering speed is important in circuit running, the rigidity of the tread portion 2 is increased so as to suppress the bending deformation, and a good reaction force is always obtained, and the cornering force is easily increased.

At the same time, since the product (k × N) is 15000 N/mm or less, the ground contact area is easily secured, and the grip performance is improved.

In particular, in the case of a vehicle having a large engine capacity in which acceleration performance is important in circuit running, as the ground contact area is increased, the grip performance is improved, and the acceleration performance is easily enhanced.

It is preferable that the average cord count N of the band cord 10 is set in a range from 10 to 40.

When the average cord count N is 10 or more, the rigidity of the tread portion 2 is easily secured, and the grip performance and the durability performance are improved.

When the average cord count N is 40 or less, the ground contact area is easily secured and the grip performance is improved.

The band cord(s) 10 is wound spirally, circumferentially of the tire so that the band 7 extends in the tire axial direction along the tread 2S of the tread portion 2.

As a result, as shown in Fig. 4, in the meridian cross section of the tire 1, the band 7 is curved in an arc shape which is convex toward the radially outside.

Preferably, the developed width BTW of the band 7 is set in a range from 70% to 90% of the developed width TTW of the tread portion 2.

When the developed width BTW is 70% or more of the developed width TTW, the rigidity of the tread portion 2 in the shoulder portion 73 is easily secured, and the feeling of withstanding skid during cornering is improved.

When the developed width BTW is 90% or less of the developed width TTW, the tread portion 2 is likely to bend in the shoulder portion 73, and in particular, the slide controllability and the edge grip performance in circuit running are improved.

In the present embodiment, the band 7 is formed by spirally winding a band tape.

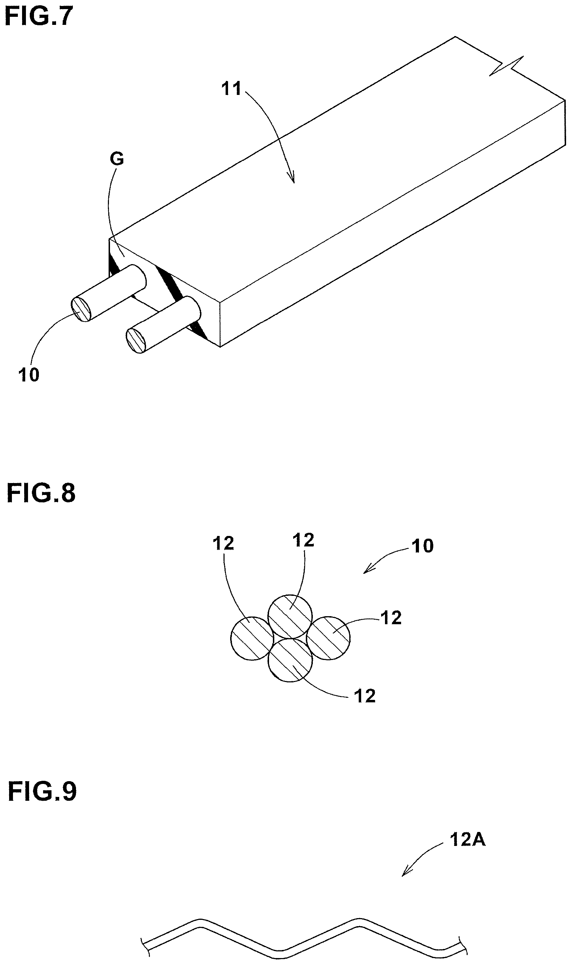

An example of the band tape 11 is schematically shown in Fig. 7. As shown, the band tape 11 is a tape of rubber G in which a plurality of parallel band cords 10 (two in this example) are embedded along the length thereof.

By forming the band tape 11 with the plurality of band cords 10, the twist of the band cords 10 during winding is suppressed, and the winding operation becomes easy.

In the present embodiment, as the band cord 10, a steel cord formed by twisting a number (n) of steel strands 12 is used.

Fig. 8 is a schematic cross sectional view of an example of such steel cord in which four steel strands or four steel filaments 12 are twisted together to have a 1x4 structure, namely, this example is a so-called single-twisted cord.

It is also possible to employ a single-twisted cord having a 1x5 structure which is formed by twisting five strands (five steel filaments) together, a double-twisted cord having a 3x3 structure which is formed by twisting together three strands each formed by twisting three steel filaments together, and the like.

Such steel cords are, regardless of the twist structures, less likely to buckle as compared with organic fiber cords such as aramid.

The band cords 10 constituting the band 7 may be a combination of a steel cord and a cord made of another material.

It is preferable that the compressive stiffness k of the band cord 10 is set in a range from 10 to 1000 N/mm.

When the compressive stiffness k is 10 N/mm or more, the rigidity of the tread portion 2 is easily secured, and the grip performance and the durability performance are improved.

When the compressive stiffness k is 1000 N/mm or less, the ground contact area is easily secured, and the grip performance is improved.

It is preferable that the band cord 10 includes a strand (steel filament) shaped in the state before twisted.

An example of the shaped strand (steel filament) 12A is shown in Fig. 9. As the shaped strand 12A, for example, a twodimensionally waved steel filament can be suitably employed.

By using such shaped strand 12A, it becomes easy to adjust the compressive stiffness k of the band cord 10.

While detailed description has been made of a preferable embodiment of the present invention, the present invention can be embodied in various forms as defined by the appended claims without being limited to the illustrated embodiment.

### Comparison tests

Based on the structure shown in Fig. 1, motorcycle tires having the following sizes were experimentally manufactured and tested for the acceleration performance.
Test Vehicle: Motorcycle with 1000cc 4-cycle engine
Front tire size: 120/70R17
Rear tire size: 200/60R17
Front tire pressure: 240 kPa
Rear tire pressure: 160 kPa

Length Lb was measured at a first point of time of 30 minutes after the band cord piece was taken out, and length La was measured at a second point of time of 24 hours after the band cord piece was taken out. (The same applies to the following examples)

Specifications of the test tires are shown in Table 1.

The test methods were as follows.

### < Acceleration performance test >

The test vehicle on which test tires were mounted, was run on a test course, and the test rider evaluated the acceleration performance.

The results are indicated in Table 1 by an index based on comparative example 1 being 100, wherein the larger the value, the better the acceleration performance.

**Table 1**

| tire | comparative example 1 | working example 1 | working example 2 |
|---|---|---|---|
| band cord | Lb > La | Lb = La | Lb<La |
| acceleration performance | 100 | 110 | 120 |

As is clear from Table 1, it was confirmed that the working examples according to the present invention were improved in the acceleration performance as compared with the comparative example.

Based on the structure shown in Fig. 1, motorcycle tires having the above-described sizes were experimentally manufactured and tested for the acceleration performance and grip performance under the above-described conditions. Specifications of the test tires are shown in Table 2.

The test methods were as follows.

### < Grip performance test >

The test vehicle on which test tires were mounted, was run on the test course, and the test rider evaluated the grip performance during deceleration and cornering.

The results are indicated in Table 2 by an index based on working example 6 being 100, wherein the larger the value, the better the grip performance.

### < Acceleration performance test >

The acceleration performance was evaluated in the same manner as above. The results are indicated in Table 2 by an index based on working example 6 being 100, wherein the larger the value, the better the acceleration performance.

### < Total performance >

For each test tire, the index numbers of all of the performances were summed up as the total performance. The results are indicated in Table 2.

**Table 2**

| tire | working example 3 | working example 4 | working example 5 | working example 6 |
|---|---|---|---|---|
| {(Lb-La)/Lb}×100 | -7.0 | -5.0 | -4.5 | -4.0 |
| deceleration grip performance | 85 | 90 | 95 | 100 |
| cornering grip performance | 85 | 90 | 95 | 100 |
| acceleration performance | 110 | 110 | 105 | 100 |
| total performance | 280 | 290 | 295 | 300 |
| | | | | |

| tire | working example 7 | working example 8 | working example 9 | |
|---|---|---|---|---|
| {(Lb-La)/Lb}×100 | -3.0 | 0.0 | 1.0 | |
| deceleration grip performance | 100 | 105 | 105 | |
| cornering grip performance | 100 | 105 | 105 | |
| acceleration performance | 100 | 80 | 75 | |
| total performance | 300 | 290 | 285 | |

Based on the structure shown in Fig. 1, motorcycle tires having the above-described sizes were experimentally manufactured by changing values {(Lb-La)/Lb}x100 in the crown portion, middle portions and shoulder portions, and tested for the grip performance and acceleration performance. Specifications of the test tires are shown in Table 3.

The test methods were as follows.

### < Grip performance test >

The grip performance during deceleration and cornering was evaluated in the same manner as described above. The results are indicated in Table 3 by an index based on working example 11 being 100, wherein the larger the value, the better the grip performance.

### < Acceleration performance test >

The acceleration performance was evaluated in the same manner as described above. The results are indicated in Table 3 by an index based on working example 11 being 100, wherein the larger the value, the better the acceleration performance.

**Table 3**

| tire | | working example 10 | working example 11 | working example 12 | working example 13 |
|---|---|---|---|---|---|
| {(Lb-La)/Lb}×100 | | | | | |
| | crown portion | -3.0 | -2.0 | -1.0 | -1.0 |
| | middle portion | -2.0 | -2.0 | -2.0 | -2.0 |
| | shoulder portion | -2.0 | -2.0 | -2.0 | -3.0 |
| deceleration grip performance | | 95 | 100 | 105 | 110 |
| cornering grip performance | | 95 | 100 | 105 | 110 |
| acceleration performance | | 95 | 100 | 105 | 110 |
| total performance | | 285 | 300 | 315 | 330 |

Based on the structure shown in Fig. 1, motorcycle tires having the above-described sizes were experimentally manufactured, and tested for transient characteristics under the above-described conditions.

Specifications of the test tires are shown in Table 4.

The test methods were as follows.

### < Transient characteristic test >

The test vehicle on which test tires were mounted, was run on the test course, and the test rider evaluated transient characteristics from deceleration to acceleration through cornering.

The results are indicated in Table 4 by an index based on working example 15 being 100, wherein the larger the value, the better the transient characteristic.

**Table 4**

| tire | working example 14 | working example 15 | working example 16 |
|---|---|---|---|
| band code | Lb<La | Lb<La | Lb<La |
| absolute value of difference in {(Lb-La)/Lb}×100 | 3.0 | 2.0 | 1.0 |
| transient characteristic | 90 | 100 | 105 |

Based on the structure shown in Fig. 1, motorcycle tires having the above-described sizes were experimentally manufactured and tested for the grip performance, acceleration performance and durability performance under the above-described conditions.

Specifications of the test tires are shown in Table 5.

The test methods were as follows.

### < Grip performance test >

The grip performance during deceleration and cornering was evaluated in the same manner as described above. The results are indicated in Table 5 by an index based on working example 19 being 100, wherein the larger the value, the better the grip performance.

### < Acceleration performance test >

The acceleration performance was evaluated in the same manner as described above. The results are indicated in Table 5 by an index based on working example 19 being 100, wherein the larger the value, the better the acceleration performance.

### < Durability performance test >

Using a tire test drum, each test tire was run at a speed of 81 km/h (front tire load 2.86 kN, rear tire load 5.74 kN), and the running distance until the tire was damaged was measured.

The results are indicated in Table 5 by an index based on working example 19 being 100, wherein the larger the value, the better the durability.

**Table 5**

| tire | working example 17 | working example 18 | working example 19 | working example 20 | working example 21 |
|---|---|---|---|---|---|
| band cord | Lb<La | Lb<La | Lb<La | Lb<La | Lb<La |
| k × N (N/mm) | 1000 | 1500 | 5000 | 15000 | 20000 |
| deceleration grip performance | 105 | 105 | 100 | 95 | 85 |
| cornering grip performance | 105 | 105 | 100 | 95 | 85 |
| acceleration performance | 95 | 100 | 100 | 105 | 110 |
| durability | 85 | 90 | 100 | 105 | 110 |
| total performance | 390 | 400 | 400 | 400 | 390 |

Based on the structure shown in Fig. 1, motorcycle tires having the above-described sizes were experimentally manufactured and tested for the grip performance, acceleration performance and durability performance under the above-described conditions.

Specifications of the test tires are shown in Table 6.

The test methods were as follows.

### < Grip performance test >

The grip performance during deceleration and cornering was evaluated in the same manner as described above. The results are indicated in Table 6 by an index based on working example 24 being 100, wherein the larger the value, the better the grip performance.

### < Acceleration performance test >

The acceleration performance was evaluated in the same manner as above. The results are indicated in Table 6 by an index based on working example 24 being 100, wherein the larger the value, the better the acceleration performance.

### < Durability performance test >

The durability was evaluated in the same manner as above.

The result is an index with Example 24 as 100, and the larger the value, the better the durability performance.

**Table 6**

| tire | working example 22 | working example 23 | working example 24 | working example 25 | working example 26 |
|---|---|---|---|---|---|
| band cord | Lb<La | Lb<La | Lb<La | Lb<La | Lb<La |
| average cord count N | 5 | 10 | 20 | 40 | 60 |
| deceleration grip performance | 105 | 105 | 100 | 95 | 85 |
| cornering grip performance | 105 | 105 | 100 | 95 | 85 |
| acceleration performance | 95 | 100 | 100 | 105 | 110 |
| durability | 85 | 90 | 100 | 105 | 110 |
| total performance | 390 | 400 | 400 | 400 | 390 |

Based on the structure shown in Fig. 1, motorcycle tires having the above-described sizes were experimentally manufactured and tested for the grip performance, acceleration performance and durability performance under the above-described conditions.

Specifications of the test tires are shown in Table 7.

The test methods were as follows.

### < Grip performance test >

The grip performance during deceleration and cornering was evaluated in the same manner as described above.

The results are indicated in Table 7 by an index based on working example 29 being 100, wherein the larger the value, the better the grip performance.

### < Acceleration performance test >

The acceleration performance was evaluated in the same manner as above. The results are indicated in Table 7 by an index based on working example 29 being 100, wherein the larger the value, the better the acceleration performance.

### < Durability performance test >

The durability was evaluated in the same manner as above.

The results are indicated in Table 7 by an index based on working example 29 being 100, wherein the larger the value, the better the durability performance.

**Table 7**

| tire | working example 27 | working example 28 | working example 29 | working example 30 | working example 31 |
|---|---|---|---|---|---|
| band cord | Lb<La | Lb<La | Lb<La | Lb<La | Lb<La |
| compressive stiffness k (N/mm) | 5 | 10 | 100 | 1000 | 2000 |
| deceleration grip performance | 105 | 105 | 100 | 95 | 85 |
| cornering grip performance | 105 | 105 | 100 | 95 | 85 |
| acceleration performance | 95 | 100 | 100 | 105 | 110 |
| durability performance | 85 | 90 | 100 | 105 | 110 |
| total performance | 390 | 400 | 400 | 400 | 390 |

Based on the structure shown in Fig. 1, motorcycle tires having the above-described sizes were experimentally manufactured and tested for feeling of withstanding skid during cornering and slide controllability under the above-described conditions.

Specifications of the test tires are shown in Table 8.

The test methods were as follows.

### < Cornering skid withstanding feeling test >

The test vehicle on which test tires were mounted, was run on the test course, and the test rider evaluated the feeling of withstanding skid during cornering.

The results are indicated in Table 8 by an index based on working example 34 being 100, wherein the larger the value, the better the feeling of withstanding skid during cornering.

### < Slide control performance test >

The test vehicle on which test tires were mounted, was run on the test course, and the test rider evaluated slide controllability. The results are indicated in Table 8 by an index based on working example 34 being 100, wherein the larger the value, the better the slide controllability.

**Table 8**

| tire | working example 32 | working example 33 | working example 34 | working example 35 | working example 36 |
|---|---|---|---|---|---|
| band cord | Lb<La | Lb<La | Lb<La | Lb<La | Lb<La |
| BTW/TTW (%) | 60 | 70 | 80 | 90 | 100 |
| cornering skid withstanding feeling | 90 | 95 | 100 | 105 | 105 |
| slide controllability | 105 | 105 | 100 | 95 | 90 |
| total performance | 195 | 200 | 200 | 200 | 195 |

### Description of the reference signs

- 1: tire
- 2: tread portion
- 2S: tread
- 7: band
- 10: band cord
- 11: band tape
- 12A: strand
- 71: crown portion
- 72: middle portion
- 73: shoulder portion
- BTW: developed width of band
- CL: tire equator
- G: rubber
- N: average cord count
- TTW: developed width of tread portion
- W1: developed width of crown portion
- W3: developed width of shoulder portion
- k: compressive stiffness

## Claims

1. A tire (1) comprising a tread portion (2) provided with a band (7) composed of at least one band cord (10) wound spirally and circumferentially of the tire (1) and embedded in the tread portion (2), **characterized in that**
when a band cord piece is taken out from said at least one band cord (10) embedded in the tread portion (2) and
measured for the length, at least in a part of the tread portion (2), a length Lb is smaller than a length La, where
the length Lb is measured at a first point of time after the band cord piece has been taken out, and
the length La is measured at a second point of time after the first point of time.

2. The tire (1) according to claim 1, wherein
the second point of time is 24 hours after the band cord piece has been taken out.

3. The tire (1) according to claim 2, wherein
a difference (Lb-La) of the length Lb from the length La is in a range from -5.0% up to but excluding 0.0% of the length Lb.

4. The tire (1) according to claim 3, wherein
the difference (Lb-La) is in a range from -4.5% up to but excluding 0.0% of the length Lb.

5. The tire (1) according to claim 4, wherein
the difference (Lb-La) is in a range from -4.0% up to but excluding 0.0% of the length Lb.

6. The tire (1) according to any one of claims 1 to 5, wherein
the length of the band cord piece is at least 1/4 of the circumference of the band (7).

7. The tire (1) according to any one of claims 1 to 6, wherein
the band (7) is provided so as to extend in the tire axial direction across the tire equator (CL), and
a value (Lb-La)/Lb obtained in a crown portion (71) of the band (7) which is defined as being centered on the tire equator (CL) and having a developed width (W1) of 10% of the developed width (BTW) of the band (7) is larger than a value (Lb-La)/Lb obtained in a portion of the band (7) other than the crown portion (71).

8. The tire (1) according to claim 7, wherein
when a shoulder portion (73) of the band (7) is defined as having a developed width (W3) of 10% of the developed width (BTW) of the band (7) and extending from each of axial edges of the band (7), and a middle portion (72) of the band (7) is defined as extending between the crown portion (71) and each shoulder portion (73), then
absolute values of differences in the value {(Lb-La)/Lb}×100 between the crown portion (71), the shoulder portions (73) and the middle portions (72) are not more than 2.0.

9. The tire (1) according to any one of claims 1 to 8, wherein
a product (k × N) of a compressive stiffness k of each band cord (10) and an average cord count N per 25 mm of the band (7) is in a range from 1500 to 15000 N/mm.

10. The tire (1) according to claim 9, wherein
the average cord count N per 25 mm is 10 to 40.

11. The tire (1) according to claim 7 or 8, wherein
the developed width (BTW) of the band (7) is in a range from 70% to 90% of the developed width (TTW) of the tread portion (2).

12. The tire (1) according to claim 7, 8 or 11, wherein
said at least one band cord (10) is a plurality of the band cords (10), and the band (7) is formed by winding a tape (11) of rubber (G) in which the plurality of the band cords (10) are embedded parallel with each other along the length of the tape (11).

13. The tire (1) according to any one of claims 1 to 12, wherein
the band cords (10) include a steel cord.

14. The tire (1) according to claim 13, wherein
a compressive stiffness k of the band cord (10) is 10 to 1000 N/mm.

15. The tire (1) according to any one of claims 1 to 14, wherein
each band cord (10) is composed of a plurality of strands (12) twisted together, and the strands (12) include at least one strand (12A) shaped before twisted.

16. The tire (1) according to any one of claims 1 to 15, which is a motorcycle tire.

## Patentansprüche

1. Reifen (1), der einen Laufflächenabschnitt (2) umfasst, der mit einem Band (7) versehen ist, das aus wenigstens einem Bandkord (10) besteht, der spiralförmig und in Umfangsrichtung des Reifens (1) gewickelt und in den Laufflächenabschnitt (2) eingebettet ist, **dadurch gekennzeichnet, dass**,
wenn ein Bandkordstück aus dem wenigstens einen Bandkord (10), der in den Laufflächenabschnitt (2) eingebettet ist, herausgenommen und auf Länge gemessen wird, wenigstens in einem Teil des Laufflächenabschnitts (2), eine Länge Lb kleiner ist als eine Länge La, wobei
die Länge Lb zu einem ersten Zeitpunkt gemessen wird, nachdem das Bandkordstück herausgenommen wurde, und
die Länge La zu einem zweiten Zeitpunkt nach dem ersten Zeitpunkt gemessen wird.

2. Reifen (1) nach Anspruch 1, wobei der zweite Zeitpunkt 24 Stunden nach dem Herausnehmen des Bandkordstücks liegt.

3. Reifen (1) nach Anspruch 2, wobei eine Differenz (Lb-La) zwischen der Länge Lb und der Länge La in einem Bereich von -5,0 % bis zu, aber ausschließlich 0,0 % der Länge Lb liegt.

4. Reifen (1) nach Anspruch 3, wobei die Differenz (Lb-La) in einem Bereich von -4,5 % bis zu, aber ausschließlich 0,0 % der Länge Lb liegt.

5. Reifen (1) nach Anspruch 4, wobei die Differenz (Lb-La) in einem Bereich von -4,0 % bis zu, aber ausschließlich 0,0 % der Länge Lb liegt.

6. Reifen (1) nach einem der Ansprüche 1 bis 5, wobei die Länge des Bandkordstücks mindestens 1/4 des Umfangs des Bandes (7) beträgt.

7. Reifen (1) nach einem der Ansprüche 1 bis 6, wobei
das Band (7) so vorgesehen ist, dass es sich in der axialen Richtung des Reifens über den Reifenäquator (CL) erstreckt, und
ein Wert (Lb-La)/Lb, der in einem Kronenabschnitt (71) des Bandes (7) erhalten wird, der so definiert ist, dass er auf dem Reifenäquator (CL) zentriert ist und eine Abwicklungsbreite (W1) von 10% der Abwicklungsbreite (BTW) des Bandes (7) aufweist, größer ist als ein Wert (Lb-La)/Lb, der in einem anderen Abschnitt des Bandes (7) als dem Kronenabschnitt (71) erhalten wird.

8. Reifen (1) nach Anspruch 7, wobei,
wenn ein Schulterabschnitt (73) des Bandes (7) so definiert ist, dass er eine Abwicklungsbreite (W3) von 10 % der Abwicklungsbreite (BTW) des Bandes (7) aufweist und sich von jeder von axialen Kanten des Bandes (7) aus erstreckt, und ein Mittelabschnitt (72) des Bandes (7) so definiert ist, dass er sich zwischen dem Kronenabschnitt (71) und jedem Schulterabschnitt (73) erstreckt, dann
die absoluten Werte von Differenzen des Wertes {(Lb-La)/Lb}x100 zwischen dem Kronenabschnitt (71), den Schulterabschnitten (73) und den Mittelabschnitten (72) nicht mehr als 2,0 betragen.

9. Reifen (1) nach einem der Ansprüche 1 bis 8, wobei das Produkt (k × N) aus der Drucksteifigkeit k jedes Bandkords (10) und der durchschnittlichen Kordanzahl N pro 25 mm des Bandes (7) in einem Bereich von 1500 bis 15000 N/mm liegt.

10. Reifen (1) nach Anspruch 9, wobei die durchschnittliche Kordanzahl N pro 25 mm 10 bis 40 beträgt.

11. Reifen (1) nach Anspruch 7 oder 8, wobei die Abwicklungsbreite (BTW) des Bandes (7) in einem Bereich von 70% bis 90% der Abwicklungsbreite (TTW) des Laufflächenabschnitts (2) liegt.

12. Reifen (1) nach Anspruch 7, 8 oder 11, wobei der mindestens eine Bandkord (10) eine Vielzahl von Bandkorden (10) ist und das Band (7) durch Wickeln eines Bandes (11) aus Kautschuk (G) gebildet ist, in den die Vielzahl der Bandkorde (10) parallel zueinander entlang der Länge des Bandes (11) eingebettet sind.

13. Reifen (1) nach einem der Ansprüche 1 bis 12, wobei die Bandkorde (10) einen Stahlkord umfassen.

14. Reifen (1) nach Anspruch 13, wobei eine Drucksteifigkeit k des Bandkords (10) 10 bis 1000 N/mm beträgt.

15. Reifen (1) nach einem der Ansprüche 1 bis 14, wobei jeder Bandkord (10) aus einer Vielzahl von miteinander verdrillten Litzen (12) zusammengesetzt ist und die Litzen (12) mindestens eine vor dem Verdrillen geformte Litze (12A) umfassen.

16. Reifen (1) nach einem der Ansprüche 1 bis 15, der ein Motorradreifen ist.

## Revendications

1. Pneumatique (1) comprenant une portion formant bande de roulement (2) dotée d'une bande (7) composée d'au moins un câblé de bande (10) enroulé en spirale et circonférentiellement par rapport au pneumatique (1) et noyé dans la portion formant bande de roulement (2), **caractérisé en ce que**
quand un morceau de câblé de bande est retiré hors dudit au moins un câblé de bande (10) noyé dans la portion formant bande de roulement (2) et mesuré pour la longueur, au moins dans une partie de la portion formant bande de roulement (2), une longueur Lb est plus petite qu'une longueur La, où
la longueur Lb est mesurée à un premier instant après que le morceau de câblé de bande a été retiré, et
la longueur La est mesurée à un second instant après le premier instant.

2. Pneumatique (1) selon la revendication 1, dans lequel
le second instant est 24 heures après que le morceau de câblé de bande a été retiré.

3. Pneumatique (1) selon la revendication 2, dans lequel
la différence (Lb - La) de la longueur Lb par rapport à la longueur La est dans une plage allant de - 5,0 % jusqu'à mais à l'exclusion de 0,0 % de la longueur Lb.

4. Pneumatique (1) selon la revendication 3, dans lequel
la différence (Lb - La) est dans une plage allant de - 4,5 % jusqu'à mais à l'exclusion de 0,0 % de la longueur Lb.

5. Pneumatique (1) selon la revendication 4, dans lequel
la différence (Lb - La) est dans une plage allant de - 4,0 % jusqu'à mais à l'exclusion de 0,0 % de la longueur Lb.

6. Pneumatique (1) selon l'une quelconque des revendications 1 à 5, dans lequel
la longueur du morceau de câblé de bande est d'au moins ¼ de la circonférence de la bande (7).

7. Pneumatique (1) selon l'une quelconque des revendications 1 à 6, dans lequel
la bande (7) est prévue de manière à s'étendre dans la direction axiale du pneumatique à travers l'équateur de pneumatique (CL), et
une valeur (Lb - La) / Lb obtenue dans une portion de couronne (71) de la bande (7) qui est définie comme étant centrée sur l'équateur de pneumatique (CL) et ayant une largeur développée (W1) de 10 % de la largeur développée (BTW) de la bande (7) est plus grande qu'une valeur (Lb - La) / Lb obtenue dans une portion de la bande (7) autre que la portion de couronne (71).

8. Pneumatique (1) selon la revendication 7, dans lequel
quand une portion d'épaulement (73) de la bande (7) est définie comme ayant une largeur développée (W3) de 10 % de la largeur développée (BTW) de la bande (7) et s'étendant depuis chacun des bords axiaux de la bande (7), et une portion médiane (72) de la bande (7) est définie comme s'étendant entre la portion de couronne (71) et chaque portion d'épaulement (73), alors
des valeurs absolues de différences dans la valeur {(Lb - La) / Lb} × 100 entre la portion de couronne (71), les portions d'épaulement (73) et les portions médianes (72) ne sont pas supérieures à 2,0.

9. Pneumatique (1) selon l'une quelconque des revendications 1 à 8, dans lequel
un produit (k × N) d'une rigidité à la compression k de chaque câblé de bande (10) et d'un nombre moyen N de câblés pour 25 mm de la bande (7) est dans une plage allant de 1 500 à 15 000 N/mm.

10. Pneumatique (1) selon la revendication 9, dans lequel
le nombre moyen N de câblés pour 25 mm et de 10 à 40.

11. Pneumatique (1) selon la revendication 7 ou 8, dans lequel
la largeur développée (BTW) de la bande (7) est dans une plage allant de 70 % à 90 % de la largeur développée (TTW) de la portion formant bande de roulement (2).

12. Pneumatique (1) selon la revendication 7, 8 ou 11, dans lequel
ledit au moins un câblé de bande (10) est une pluralité des câblés de bande (10), et la bande (7) est formée en enroulant un ruban (11) de caoutchouc (G) dans lequel la pluralité des câblés de bande (10) sont noyés parallèlement les uns aux autres le long de la longueur du ruban (11).

13. Pneumatique (1) selon l'une quelconque des revendications 1 à 12, dans lequel
les câblés de bande (10) incluent un câblé en acier.

14. Pneumatique (1) selon la revendication 13, dans lequel
une rigidité à la compression k du câblé de bande (10) est de 10 à 1 000 N/mm.

15. Pneumatique (1) selon l'une quelconque des revendications 1 à 14, dans lequel
chaque câblé de bande (10) est composé d'une pluralité de torons (12) torsadés les uns avec les autres, et les torons (12) incluent au moins un toron (12A) conformé avant d'être enroulé.

16. Pneumatique (1) selon l'une quelconque des revendications 1 à 15, qui est un pneumatique de motocyclette.
